# EUROPEAN PATENT APPLICATION

(11) **EP 4 395 415 A1**
(43) Date of publication of application: **03.07.2024**
(21) Application number: 21958857.1
(22) Date of filing: 30.09.2021
(51) Int. Cl.: H04W 36/24, H04W 88/04

(54) **PARAMETER CONFIGURATION METHOD, APPARATUS, AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN); ZHANG, Boyuan, Dongguan, Guangdong 523860 (CN)
(74) Representative: Taor, Simon Edward William
(86) International application number: PCT/CN2021/122103
(87) International publication number: WO 2023/050280

(57) **Abstract**

The present application relates to a parameter configuration method, apparatus, and device, and a storage medium. The method comprises: a first user equipment acquires a first parameter, the first parameter being used by the first user equipment for device configuration under different access conditions, and the different access conditions comprising: the first user equipment directly accessing a network, or the first user equipment accessing a network by means of a second user equipment. The first parameter obtained by the first user equipment is a parameter matching the access condition, so that the first user equipment can, when the first user equipment directly accesses the network or accesses the network by means of the second user equipment, obtain the first parameter adapted to the access condition, such that the first parameter acquired by the first user equipment can meet communication requirements under different access conditions.

## Description

### TECHNICAL FIELD

The present disclosure relates to the communication field, in particular to a method and an apparatus for parameter configuration, a device and a storage medium.

### BACKGROUND

With the development of communication technology, the user equipment (UE) not only can communicate with the network device directly, but also can communicate with the network device through the relay of other UE. The above UE providing the relay service can be referred to as a relay UE, and the equipment that is accessed to the network through the relay UE can be referred to as a remote UE. The communication technology between the remote UE and the relay UE is a sidelink (SL) communication technology. Compared with traditional communication method, the above SL communication can have the higher spectrum efficiency and less transmission delay.

In the traditional method, the network device can transmit configuration parameter(s) to the UE through the broadcast manner, and the UE can complete the device configuration based on the configuration parameter(s) transmitted by the network device. However, there is a situation that the configuration parameter(s) transmitted by the network device cannot meet the actual communication requirements of the UE.

### SUMMARY

The embodiments of the present disclosure provide a method and an apparatus for parameter configuration, a device and a storage medium, which can solve the problem that the configuration parameter(s) does not match the actual communication requirement of the UE to a certain extent.

In the first aspect, a method for parameter configuration includes the following operation.

The first UE obtains the first parameter(s). The first parameter(s) is(are) used for the first UE to perform device configuration under different access situations, and the different access situations include that the first UE is accessed to network directly, or the first UE is accessed to the network through the second UE.

In the second aspect, a method for parameter configuration includes the following operation.

The second UE transmits the first message to the first UE. The first message is used for instructing the first UE to obtain the first parameter(s). The first parameter(s) is(are) used for the first UE to perform device configuration under different access situations, and the different access situations include that the first UE is accessed to network directly, or the first UE is accessed to the network through the second UE.

In the third aspect, a method for parameter configuration includes the following operations.

The second UE receives the first message transmitted by a network device. The first message includes the first configuration parameter(s).

The second UE adjusts the first sub-parameter(s) in the first configuration parameter(s) to obtain the second sub-parameter(s) applicable to the first UE. The first UE is accessed to network through the second UE.

The second UE transmits the second sub-parameter(s) to the first UE.

In the fourth aspect, a method for parameter configuration includes the following operations.

A network device generates configuration parameter(s) of the first UE.

The network device transmits the configuration parameter(s) to the first UE. The configuration parameter is used for the first UE to perform device configuration under different access situations, and the different access situations include that the first UE is accessed to network directly, or the first UE is accessed to the network through the second UE.

In the fifth aspect, an apparatus for parameter configuration, applicable for the first UE, includes an obtaining module.

The obtaining module is configured to obtain the first parameter(s). The first parameter(s) is(are) used for the first UE to perform device configuration under different access situations, and the different access situations include that the first UE is accessed to network directly, or the first UE is accessed to the network through the second UE.

In the sixth aspect, an apparatus for parameter configuration includes a transmitting module.

The transmitting module is configured to transmit the first message to the first UE. The first message is used for instructing the first UE to obtain the first parameter(s). The first parameter(s) is used for the first UE to perform a device configuration under different access situations, and the different access situations include that the first UE is accessed to network directly, or the first UE is accessed to the network through the second UE.

In the seventh aspect, an apparatus for parameter configuration includes a receiving module, an adjusting module and a transmitting module.

The receiving module is configured to receive the first message transmitted by a network device. The first message includes the first configuration parameter(s).

The adjusting module is configured to adjust the first sub-parameter(s) in the first configuration parameter(s) to obtain the second sub-parameter(s) applicable to the first UE. The first UE is accessed to network through the second UE.

The transmitting module is configured to transmit the second sub-parameter(s) to the first UE.

In the eighth aspect, an apparatus for parameter configuration includes a generating module and a transmitting module.

The generating module is configured to generate configuration parameter(s) of the first UE.

The transmitting module is configured to transmit the configuration parameter(s) to the first UE. The configuration parameter(s) is used for the first UE to perform device configuration under different access situations, and the different access situations include that the first UE is accessed to network directly, or the first UE is accessed to the network through an second UE.

In the ninth aspect, UE including a memory and a processor is provided. The memory is configured to store a computer program, and when the processor executes the computer program, the operations of the method for parameter configuration of any one of the first to third aspects are implemented.

In the tenth aspect, a network device including a memory and a processor is provided. The memory is configured to store a computer program, and when the processor executes the computer program, the operations of the method for parameter configuration of the fourth aspect are implemented.

In the eleventh aspect, a computer readable storage medium is provided. A computer program is stored on the computer readable storage medium, and when the computer program is executed by a processor, the operations of the above methods for parameter configuration are implemented.

In the method and apparatus for parameter configuration, the device, and the storage medium, the first UE obtains the first parameter(s). The first parameter(s) is(are) used for the first UE to perform the device configuration under different access situations. The different access situations include that the first UE is accessed to the network directly, or the first UE is accessed to the network through the second UE. Since the first parameter(s) obtained by the first UE is parameter(s) matched with the access situation, the first UE can obtain the first parameter(s) adapted to the access situation when being accessed to the network directly or through the second UE, so that the first parameter(s) obtained by the first UE can meet the communication requirements under different access situations.

### BRIEF DESCRIPTION OF THE DRAWINGS

In order to more clearly explain the technical solutions in the embodiments of the present disclosure or in the prior art, the drawings required to be used in the description of the embodiments or the prior art will be briefly described below. It will be obvious that the drawings described below are only some embodiments of the present disclosure, and other drawings may be obtained from these drawings without creative effort for those of ordinary skill in the art.
FIG. 1 is an application environment diagram of a method for parameter configuration provided by an embodiment.
FIG. 2 is a flowchart of a method for parameter configuration provided by an embodiment.
FIG. 3 is a schematic diagram of a method for parameter configuration provided by another embodiment.
FIG. 4 is a schematic diagram of a method for parameter configuration provided by another embodiment.
FIG. 5 is a schematic diagram of a method for parameter configuration provided by another embodiment.
FIG. 6 is a flowchart of a method for parameter configuration provided by an embodiment.
FIG. 7 is a flowchart of a method for parameter configuration provided by an embodiment.
FIG. 8 is a flowchart of a method for parameter configuration provided by an embodiment.
FIG. 9 is a flowchart of a method for parameter configuration provided by an embodiment.
FIG. 10 is a flowchart of a method for parameter configuration provided by an embodiment.
FIG. 11 is a flowchart of a method for parameter configuration provided by an embodiment.
FIG. 12 is a block diagram of a structure of an apparatus for parameter configuration provided by an embodiment.
FIG. 13 is a block diagram of a structure of an apparatus for parameter configuration provided by an embodiment.
FIG. 14 is a block diagram of a structure of an apparatus for parameter configuration provided by an embodiment.
FIG. 15 is a block diagram of a structure of an apparatus for parameter configuration provided by an embodiment.
FIG. 16 is a block diagram of a structure of an apparatus for parameter configuration provided by an embodiment.
FIG. 17 is a schematic diagram of an internal structure of a network device provided by an embodiment.
FIG. 18 is a schematic diagram of an internal structure of UE provided by an embodiment.

### DETAILED DESCRIPTION

In order to make the object, technical solutions and advantages of the present disclosure more clear, the present disclosure will be described in further detail below with reference to the accompanying drawings and embodiments. It should be understood that the specific embodiments described herein are intended to be explanatory only and are not intended to be limiting.

In the Rel-13 Proximity-based Service (ProSe), the 3rd Generation Partnership Project (3GPP) introduces the UE-to-network relay function based on Layer 3 relay. That is, the remote UE is accessed to the network through the relay UE, and the remote UE and the relay UE are connected through the Sidelink (SL) communication.

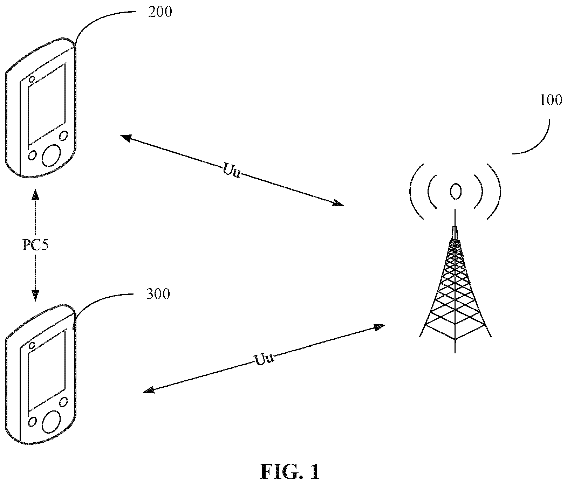

The method for parameter configuration provided by the embodiments of the present disclosure may be applied to the field of the communication technology. FIG. 1 is a schematic diagram of an application scenario of the method for parameter configuration provided by the embodiment of the present disclosure. The communication system may include at least one network device 100 and one or more UE. The first UE 200 and the second UE 300 in FIG. 1 may respectively communicate with the network device, such as performing the uplink or downlink communication. The above first UE 200 may be accessed to the network through the second UE 300, and the first UE 200 and the second UE 300 may perform the SL communication through the Proximity Communication 5 (PC5).

The above network device 100 may be any device having a wireless transceiver function, which includes but not limited to, a base station NodeB, an evolved base station eNodeB, a base station in the fifth generation (5G) communication system, a base station or a network device in future communication system, an access node in the WiFi system, a radio relay node, and a radio backhaul node, etc. The network device 100 may also be a radio controller in a cloud radio access network (CRAN) scenario. The network device 100 may also be a small station, a transmission reference point (TRP), a road side unit (RSU) or the like. The specific technology and the specific device configuration adopted by the network device 100 are not limited in the embodiments of the present disclosure.

The above UE may be a device having a wireless transceiver function, which may be but not limited to a hand-held device, a wearable device or a vehicle-mounted device, etc. The UE may be a mobile phone, a tablet computer, a computer with a wireless transceiver function, a virtual reality (VR) terminal device, an augmented reality (AR) terminal device, a wireless terminal in the industrial control, a wireless terminal in the self-driving, a wireless terminal in the remote medical, a wireless terminal in the smart grid, a wireless terminal in the transportation safety, a wireless terminal in the smart city, a wireless terminal in the smart home, etc. The application scenarios are not limited by the embodiments of the present disclosure.

In the 5G New Radio (NR), the application of the SL communication in vehicle to everything (V2X) is further expanded. Two resource grant modes are defined in the NR V2X. The remote UE and the relay UE obtain the corresponding time-frequency positions of the Physical Sidelink Control Channel (PSCCH) resource and the Physical Sidelink Shared Channel (PSSCH) resource based on the indication of the SL grant.

The network device may transmit configuration parameter(s) to the UE through the broadcast manner, etc. After receiving the above configuration parameter(s), the relay UE and the remote UE respectively complete the device configuration to prepare for the SL communication.

When the remote UE is accessed to the network through the relay UE, the request transmitted by the remote UE to the network device needs to be transmitted to the relay UE firstly, and then is transmitted to the network device through the relay UE. The relay UE and the remote UE use the same configuration parameter(s) for performing the device configuration, and the configuration parameter(s) obtained by the remote UE cannot meet the communication requirement. At present, some configuration parameters cannot be adapted to the remote UE that is accessed to the network through the relay UE and the UE that is directly accessed to the network simultaneously. For example, the above configuration parameter(s) may be a timer T300 of the Radio Resource Control (RRC) connection of the UE. When the remote UE transmits a connection request to the network device, the timer T300 is turned on, and the connection request fails when the timer expires and the reply from the network device has not been received. After the relay UE receives the connection request, if the relay device does not enter the connected state at this time, that is, the relay device does not establish the RRC connection with the network device, it needs to start its own T300 and establish the RRC connection with the network device firstly, which easily leads to the connection timeout of the remote UE.

In order to solve the above problem, the embodiments of the present disclosure provide a method for parameter configuration, which can solve the problem that the configuration parameter(s) of the remote UE cannot meet the communication requirement.

It should be noted that the method for parameter configuration of the present disclosure is not limited to solving the above technical problems, but may also be used to solve other technical problems, which is not limited in the present disclosure.

The technical solutions of the present disclosure will be described in detail with specific embodiments below. The following specific embodiments may be combined with each other. The identical or similar concepts or processes may not be repeated in some embodiments.

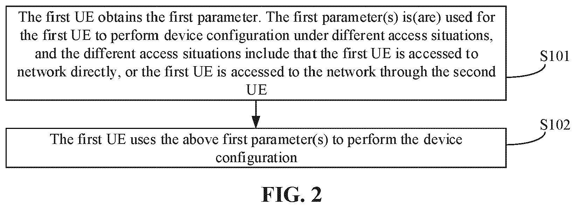

FIG. 2 is a flowchart of a method for parameter configuration in one embodiment. The method for parameter configuration in the present embodiment is described by taking operating in the UE in FIG. 1 as an example. As illustrated in FIG. 2, the above method for parameter configuration includes the following operations.

In operation S101, the first UE obtains the first parameter(s). The first parameter(s) is(are) used for the first UE to perform device configuration under different access situations, and the different access situations include that the first UE is accessed to network directly, or the first UE is accessed to the network through the second UE.

The first UE may be the UE that is accessed to the network directly or the UE that is accessed to the network through the second UE, which is not limited here. In a case that the first UE is accessed to the network through the second UE, the first UE may be accessed to the network through one second UE by one-hop, or through multiple second UEs by multi-hop. The hop number of relays of the first UE is not limited here.

The above first parameter(s) may be used for the first UE to perform device configuration. The above first parameter(s) may be resource configuration parameter(s), physical layer configuration parameter(s), media access control (MAC) layer configuration parameter(s), radio link control (RLC) layer configuration parameter(s), packet data aggregation protocol layer configuration parameter(s), RRC layer configuration parameter(s), service data adaptation protocol (SDAP) layer configuration parameter(s), or the like. The type of the first parameter(s) is not limited here.

The first parameter(s) obtained by the first UE may be parameter(s) configured for different access situations. The above different access situations include that the first UE is accessed to network directly, or the first UE is accessed to the network through a relay of the second UE. The access situation of the first UE may be changed according to the connection state of the network device. When the first UE is located in the coverage area of the network device, the first UE may be accessed to the network directly or accessed to the network through the second UE. When the first UE is located outside the coverage area of the network device, the first UE may be accessed to the network through the second UE.

Furthermore, the first UE may correspond to one parameter or multiple parameters under the same access situation, which is not limited here.

When the first UE obtains the first parameter(s), the first UE may obtain the first parameter(s) transmitted by the network device, and may extract the first parameter(s) from the message transmitted by the network device. For example, the network device may transmit the first parameter(s) to the first UE through an RRC reconfiguration message. Alternatively, the first UE may obtain the first parameter(s) transmitted by the second UE connected with the first UE, or extract the first parameter(s) from the message transmitted by the second UE. Alternatively, the first parameter(s) may be preset parameter(s) in the first UE, and the first UE may select the first parameter(s) corresponding to the access situation according to the access situation. The obtaining method of the first parameter(s) is not limited here.

The first parameter(s) obtained by the first UE may include parameter(s) corresponding to the access situation of the first UE, or parameters corresponding to different access situations respectively. The first UE may determine the parameter(s) corresponding to the current access situation according to the access situation.

In operation S 102, the first UE uses the above first parameter(s) to perform the device configuration.

After obtaining the above first parameter(s), the first UE may use the above first parameter(s) to perform the device configuration, so that the configured first UE can use the communication connection under the current access situation.

In the case that the first UE is accessed to the network directly, after obtaining the first parameter(s), the first parameter(s) may be used for communication connection with the network device. In the case that the first UE is accessed to the network through the second UE, after obtaining the first parameter(s), the first parameter may be used to perform the SL communication with the second UE and/or to communicate with the network device.

In the method for parameter configuration, the first UE obtains the first parameter(s). The first parameter(s) is(are) used for the first UE to perform the device configuration under different access situations. The different access situations include that the first UE is accessed to the network directly, or the first UE is accessed to the network through the second UE. Since the first parameter(s) obtained by the first UE is parameter(s) matched with the access situation, the first UE can obtain the first parameter(s) adapted to the access situation when being accessed to the network directly or through the second UE, so that the first parameter(s) obtained by the first UE can meet the communication requirements under different access situations.

The first parameter(s) obtained by the first UE may be configured by the network device or the first UE. In the case that the first UE is accessed to the network through the second UE, the above first parameter(s) may be configured by the second UE. In the following embodiments, scenarios for different device configuration parameters are described in detail.

In one embodiment, the first parameter(s) may be configured by the network device. Alternatively, the network device may configure the first configuration parameter(s) for the first UE that is accessed to the network through the second UE, and may also configure the second configuration parameter(s) for the first UE that is accessed to the network directly. The first configuration parameter(s) and the second configuration parameter(s) that are configured by the network device may be different or may have partially identical parameter values, which are not limited here.

The parameter(s) configured by the network device for the first UE under different access situations may be carried in a system message or in a pre-configuration, which are not limited here. In a case that the parameter(s) configured by the network device for the first UE is(are) carried in the system message, the network device may transmit the above system message to the UE in the coverage area through the broadcast manner. Alternatively, the network device may transmit the above system message to the first UE through dedicated signal, which is not limited here. In a case that the parameter(s) configured by the network device for the first UE is(are) carried in the pre-configuration, the above pre-configuration may be written into the storage area in the first UE when the first UE registers the network, and may also be pre-set in the first UE in other situations, which is not limited here.

In the case that the first UE is accessed to the network through the second UE, the first UE may receive the content of the system message transmitted by the network device and/or the second UE. Then, the first configuration parameter(s) corresponding to the first UE that is accessed to the network through the second UE in the system message is(are) determined as the first parameter(s). The above content of the system message may include the first configuration parameter(s), and may further include the second configuration parameter(s) corresponding to the UE that is accessed to the network directly. The first UE may obtain the complete parameters configured by the network device, and then obtain the first parameter(s) matching with the current access situation.

In the case that the first UE is accessed to the network through the second UE, when the first configuration parameter(s) is(are) carried in the pre-configuration configured by the network device, the first UE may determine the first configuration parameter(s) corresponding to the first UE that is accessed to the network through the second UE in the pre-configuration configured by the network device as the first parameter(s).

When the network device configures the parameter(s) for the first UE under different access situations through the system message/pre-configuration, it may be implemented in a variety of ways.

In one implementation, the network device may configure parameter(s) for the first UE under different access situations through different system messages/pre-configurations. The network device may carry parameter(s) configured for the first UE under different access situations in different system messages/pre-configurations. The network device may configure the first system message/the first pre-configuration. The first system message/the first pre-configuration includes the first configuration parameter(s) configured by the network device for the first UE that is accessed to the network through the second UE. The network device may configure another system message/pre-configuration. The above another system message/pre-configuration may include the second configuration parameter(s) configured by the network device for the first UE that is accessed to the network directly.

In the case that the first UE is accessed to the network through the second UE, the first UE may obtain the first system message and another system message transmitted by the network device, or may obtain the first system message and another system message forwarded by the second UE. The first UE may obtain the first configuration parameter(s) from the content of the received first system message transmitted by the network device or the second UE, and determine the first parameter(s) according to the first configuration parameter(s). For example, the first configuration parameter(s) may be determined as the first parameter(s). Alternatively, the first UE may obtain configuration parameter(s) related to the first UE transmitted by the second UE, such as the content of the first system message. If the first UE is assessed to the network directly, the second configuration parameter(s) may be used for performing the device configuration. In the case that the first UE is accessed to the network through the second UE, the first parameter(s) may be determined according to the first pre-configuration configured by the network device, for example, the first configuration parameter(s) in the above first pre-configuration is(are) determined as the first parameter(s). Alternatively, the first UE may receive the first parameter(s) transmitted by the second UE. The above first parameter(s) may be determined by the second UE based on the first pre-configuration configured by the network device. In the case that the first UE is accessed to the network directly, the first parameter(s) may be determined according to the second configuration parameter(s) configured by the network device, for example, the second configuration parameter(s) in the second pre-configuration is determined as the first parameter(s). Alternatively, the first UE receives the first system message and another system message transmitted by the network device, and then obtains the first parameter(s) according to the second configuration parameter(s) in the another system message, for example, the second configuration parameter(s) is(are) determined as the first parameter(s).

In another implementation, the network device may configure parameter(s) for the first UE under different access situations through different fields in the same system message/pre-configuration. The network device may configure the second system message/the second pre-configuration. The above second system message/the second pre-configuration may include the first field and the second field. The above first field may include the first configuration parameter(s) configured by the network device for the first UE that is accessed to the network through the second UE. The above second field may include the second configuration parameter(s) configured by the network device for the first UE that is accessed to the network directly.

In the case that the first UE is accessed to the network through the second UE, the second system message transmitted by the network device may be obtained, or the content of the second system message forwarded by the second UE may be obtained. The first UE may determine the first parameter(s) in the content of the second system message. Alternatively, the first UE may obtain configuration parameter(s) related to the first UE transmitted by the second UE, such as parameter value(s) in the first field in the second system message. Then the parameter value(s) in the first field is determined as the first parameter(s). In the case that the first UE is accessed to the network through the second UE, the first parameter(s) may be determined according to the second pre-configuration configured by the network device, for example, the first configuration parameter(s) in the first field in the second pre-configuration is(are) determined as the first parameter(s). Alternatively, the first UE may receive the first parameter(s) transmitted by the second UE. The above first parameter(s) may be determined by the second UE based on the content of the first field in the second pre-configuration configured by the network device. In the case that the first UE is accessed to the network directly, the second configuration parameter(s) in the second field in the second pre-configuration may be determined as the first parameter(s). Alternatively, the first UE receives the second system message transmitted by the network device, and then determines the first parameter(s) according to the second configuration parameter(s) in the second field in the second system message, for example, the second configuration parameter(s) in the second field is determined as the first parameter(s).

In another implementation, the network device configures parameter(s) for the first UE under different access situations through different values of the same field in the same message/the same pre-configuration. The network device may configure the third system message/the third pre-configuration. The above third system message/third pre-configuration includes the third field, and the third field includes the first parameter position and the second parameter position. The first parameter position includes the first configuration parameter(s) configured by the network device for the first UE that is accessed to the network through the second UE, and the second parameter position includes the second configuration parameter(s) configured by the network device for the first UE that is accessed to the network directly.

In the case that the first UE is accessed to the network through the second UE, the first UE may receive the third system message transmitted by the network device, or may receive the content of the third system message transmitted by the second UE. The first UE may determine the first parameter(s) in the content of the third system message. Alternatively, the first UE may receive configuration parameter(s) related to the first UE in the third system message transmitted by the second UE, such as the content of the third field in the third system message or the first configuration parameter(s) in the third field in the third system message. In the case that the first UE is accessed to the network through the second UE, the first parameter(s) may be obtained according to the first configuration parameter(s) in the third field in the third pre-configuration, for example, the value(s) in the first parameter position in the third field is determined as the first parameter(s).

In the method for parameter configuration, the network device configures the parameter(s) for the first UE under different access situations through the system message/pre-configuration, so that the first UE can obtain the parameter(s) matched with the access situation, and the communication requirements in different access situations are met.

In one embodiment, on the basis of the above embodiments, the first configuration parameter(s) configured by the network device for the first UE that is accessed to the network through the second UE may include configuration sub-parameters corresponding to different communication connection states. That is, the network device configures multiple configuration sub-parameters for the first UE under the access situation, and different configuration sub-parameters correspond to different communication connection states.

The above communication connection states may include the connection state between the first UE and the network device, the connection state between the first UE and the second UE, and the connection state between the second UE and the network device, which are not limited here. Alternatively, the communication connection states includes at least one of: RRC connection state of the second UE, load state of the second UE, channel quality of SL between the first UE and the second UE, or hop number of relays of the second UE and/or the first UE.

The RRC connection state of the second UE may be idle state (RRC IDLE) in which the second UE is, or connected state (RRC Connected) in which the second UE is, or Inactive state in which the second UE is. The load state of the second UE may be the number of UEs that are accessed to the network through the second UE or the amount of data to be transmitted by the second UE. The channel quality of the SL between the first UE and the second UE may be Channel Quality Indicator (CQI) of the SL channel, Channel Status Information (CSI) of the SL, channel busy ratio (CBR), or Received Signal Strength Indication (RSSI) of the SL channel. For the hop number of relays of the second UE and/or the first UE, when the first UE is accessed to the network through the second UE, it may need to be accessed through the relays of multiple UEs. Each UE providing the relay service may be a one-hop relay node. If the first UE at the remote end is accessed to the network through the relays of N UEs, the hop number of relays may be N, the hop number of relays of the second UE connected with the first UE may be N-1, and The hop number of relays of each relay node may be determined in turn. When the first UE is accessed to the network through the second UE, relay service may also be provided for other UE.

The above communication connection states may include one of the above state parameters or a combination of two or more state parameters. For example, the communication connection state is a combination of the RRC connection state of the second UE and the load state of the second UE. The above communication connection state may include: the connection state of the second UE is RRC Connected and the load state is that one UE is connected, the connection state is RRC Connected and the load state is that two UEs are connected, the connection state of the second UE is RRC IDLE and the load state is that one UE is connected, the connection state is RRC IDLE and the load state is two UEs are connected, the connection state of the second UE is RRC Inactive and the load state is that one UE is connected, the connection state is RRC Inactive and the load state is that two UEs are connected. The above is only an example of the communication connection state, and the combinations of other state parameters are not limited in the embodiments of the present disclosure.

When the network device configures the first configuration parameter(s) for the first UE by different ways, the configuration sub-parameters corresponding to different communication connection states may be indicated by different ways.

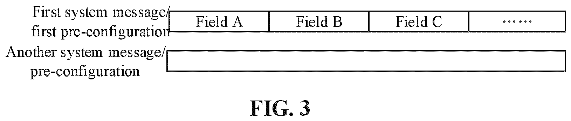

In one implementation, in a case that the network device configures parameter(s) for the first UE under different access situations through different system messages/pre-configurations, the first configuration parameter(s) may be configured through the first system message/first pre-configuration. Different fields in the first system message/first pre-configuration may correspond to different configuration sub-parameters. As illustrated in FIG. 3, the first system message/first pre-configuration is a dedicated configuration of the first UE that is accessed to the network through the second UE. The first system message/first pre-configuration includes multiple fields, which include a field A, a field B, a field C, etc. Different fields correspond to different communication connection states. Another system message/pre-configuration in FIG. 3 may be a dedicated configuration of the first UE that is accessed to the network directly.

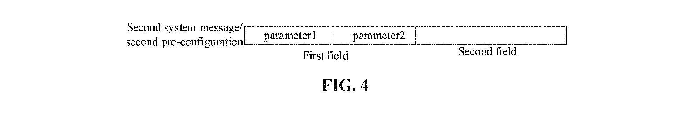

In another implementation, in a case that the network device configures parameter(s) for the first UE under different access situations through different fields in the same system message/same pre-configuration, the network device may configure the parameter(s) for the first UE that is accessed to the network through the second UE through the first field in the second system message/second pre-configuration. Different values in the above first field correspond to different configuration sub-parameters. As illustrated in FIG. 4, the second system message/second pre-configuration includes the first field, the above first field may include parameter 1 and parameter 2, and the parameterl and parameter2 are configuration sub-parameters under different communication connection states, respectively.

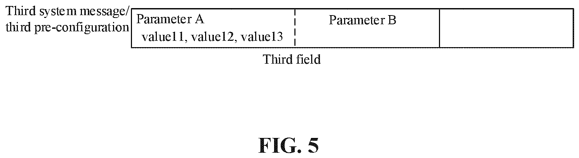

In another implementation, in a case that the network device configures parameter(s) for the first UE under different access situations through different values of the same field in the same message/same pre-configuration, the network device may configure the first configuration parameter and the second configuration parameter through the third field in the third system message/third pre-configuration. The above third field may include the first parameter position and the second parameter position. The first parameter position includes the first configuration parameter(s), and the second parameter position includes the second configuration parameter(s). The first parameter(s) may include multiple parameter values corresponding to configuration sub-parameters under different communication connection states. As illustrated in FIG. 5, the third system message/third pre-configuration includes the third field, and the third field includes a parameter A and a parameter B. The above parameter A includes multiple configuration sub-parameters, which include value 11, value 12, value 13, etc.

Taking the communication connection state as the RRC connection state as an example, the first configuration paramete(s)r configured by the network device for the first UE that is accessed to the network through the second UE may include multiple configuration sub-parameters corresponding to the multiple RRC connection states of the second UE. The second UE may transmit the first configuration parameter(s) and the RRC connection state to the first UE, so that the first UE may determine the first parameter(s) in the first configuration parameter(s) according to the RRC connection state. Alternatively, the second UE may obtain the configuration sub-parameter(s) corresponding to the RRC connection state in the first configuration parameter(s), and then transmit the configuration sub-parameter(s) to the first UE to be the first parameter(s). When the second UE transmits the first configuration parameter(s) to the first UE, the complete system message configured by the network device may be transmitted to the first UE, or the first configuration parameter(s) applicable to the first UE may be transmitted to the first UE. For example, it may be a dedicated system message corresponding to the first UE that is accessed to the network through the second UE, the dedicated first field in the system message or dedicated parameter(s) in the third field in the system message.

Taking the communication connection state being the hop number of relays of the first UE and/or the second UE as an example, the first configuration parameter(s) configured by the network device for the first UE that is accessed to the network through the second UE may include configuration sub-parameters corresponding to different hop numbers of relays. After obtaining the system message/pre-configuration transmitted by the network device, the second UE may transmit the complete system message and the hop number of relays of the first UE to the first UE, so that the first UE can determine the first parameter(s) in the system message according to the hop number of relays. Alternatively, the second UE may determine the configuration sub-parameter(s) corresponding to the hop number of relays of the first UE in the system message/pre-configuration, and then transmit the configuration sub-parameter(s) to the first UE as the first parameter(s). In addition, the second UE may transmit the hop number of relays of the second UE to the first UE. If the first UE provides the relay service for other UE, the second UE may transmit the configuration sub-parameter(s) corresponding to the hop number of relays of the first UE and the configuration sub-parameter(s) corresponding to the next hop or multi-hop UE to the first UE, which is not limited here. It should be noted that the configuration sub-parameter(s) corresponding to each hop number of relays may include multiple parameters corresponding to different RRC connection states.

When the communication connection state includes the hop number of relays, the signaling interaction may be performed among the first UE, the second UE and the network device, so that each device can know the hop number of relays corresponding to each device under the current access situation. The signaling interaction process may be performed by the unicast manner, the broadcast manner or the multicast manner. The information for the signaling interaction may be PC5-S information, PCE-RRC information, physical layer information, or Media Access Control Control Element (MAC CE) information, which is not limited here. The signaling interaction process may be performed through the PC5 interface or through the Uu interface, which is not limited here.

In the above method for parameter configuration, the network device configures the configuration sub-parameters in different communication connection states for the first UE, so that the first UE can obtain the configuration sub-parameter(s) matched with the communication connection state, the match between the configuration parameter(s) and the first UE is further improved, and when the first UE is accessed to the network through the second UE, the configuration parameters meeting the communication requirements can be obtained in different communication connection states.

In the above embodiments, the configuration manner of the configuration sub-parameter(s) of the first UE that is accessed to the network through the second UE is introduced, and in the following embodiments, the process of obtaining the configuration sub-parameter(s) matched with the communication connection state by the first UE is mainly introduced.

In one embodiment, the first configuration parameter(s) may be carried in a system message configured by the network device, and the first UE may receive the first configuration parameter(s) transmitted by the network device and/or transmitted by the second UE, and the communication connection state of the second UE. Then, the configuration sub-parameter(s) corresponding to the communication connection state in the first configuration parameter(s) is(are) determined as the first parameter(s). The first UE may receive a system message transmitted by the network device. The above system message includes the first configuration parameter(s) and the second configuration parameter(s) configured by the network device. Alternatively, the first UE may receive the content of the system message transmitted by the second UE. The first UE may determine the first configuration parameter(s) in the content of the obtained system message. Alternatively, the second UE may determine the first configuration parameter(s) applicable to the first UE in the received system message, and then transmit the first configuration parameter(s) to the first UE, so that the first UE may receive the first configuration parameter(s) transmitted by the second UE. Further, the first UE may determine a configuration sub-parameter(s) matched with the communication connection state in the first configuration parameter(s) and determine it as the first parameter(s).

In the above method for parameter configuration, the first UE can obtain the communication connection state transmitted by the second UE, and determine the required first parameter(s) according to the communication connection state, so that the obtained first parameter(s) is(are) more accurate.

In one embodiment, the first configuration parameter(s) is(are) carried in a system message configured by the network device, and the first UE may receive the first parameter(s) transmitted by the second UE. The above first parameter(s) is(are) determined by the second UE in the first configuration parameter(s) according to the communication connection state. After receiving the system message configured by the network device, the second UE may determine the first configuration parameter(s) applicable to the first UE in the system message, then determine configuration sub-parameter(s) matched with the communication connection state of the second UE in the first configuration parameter(s), and then transmit the configuration sub-parameter(s) to the first UE as the first parameter(s).

In the method for parameter configuration, the first UE may directly receive the first parameter(s) transmitted by the second UE, thereby improving the efficiency of the first UE obtaining the first parameter(s) for performing the device configuration.

In one embodiment, the first configuration parameter(s) is(are) carried in the pre-configuration configured by the network device, and the first UE may receive the communication connection state transmitted by the second UE. Then, the configuration sub-parameter(s) corresponding to the communication connection state in the first configuration parameter(s) is determined as the first parameter(s). The first UE may receive the communication connection state transmitted by the second UE, and then determine the first parameter(s) corresponding to the communication connection state in the pre-configuration.

In the method for configuring the parameter(s), the first UE does not need to receive the parameter(s) configured by the network device, and may obtain the first parameter(s) by receiving the communication connection state, thereby reducing the data interaction in the process of obtaining the first parameter(s).

In one embodiment, the first parameter(s) of the first UE may be configured by the second UE. The second UE may configure the parameter(s) for the first UE that is accessed to the network through the second UE. The second UE may configure the parameter(s) for the first UE based on a communication connection state of the second UE. The second UE may configure the first parameter(s) matched with the current communication connection state for the first UE according to the current communication connection state, and then transmit the first parameter(s) to the first UE. Alternatively, the second UE may configure multiple parameters for the first UE according to different communication connection states, and transmit the multiple parameters and/or the current communication connection state (if updated) to the first UE, and then the first UE selects the first parameter(s) among the multiple parameters according to the current communication connection state. The reference is made to above embodiment for the limitation for the communication connection state, which is not repeated here.

In another implementation, the first parameter(s) of the first UE may be determined based on parameter(s) configured by the network device. The above parameter(s) configured by the network device may be the parameter(s) uniformly configured by the network device for the first UE and the second UE, or the parameter(s) configured by the network device for the UE under different access situations, which are not limited here. After obtaining the parameter(s) configured by the network device, the second UE may adjust the parameter(s) configured by the network device to obtain the first parameter(s) applicable to the first UE, and then transmit the first parameter(s) to the first UE.

In the above method for the parameter configuration, the first parameter(s) obtained by the first UE may be determined by the second UE which provides the relay service for the first UE, and the second UE may determine the appropriate first parameter(s) for the first UE based on the communication requirement of the first UE, so that the communication requirement between the first UE and the second UE can be satisfied after the first UE uses the first parameter(s) for performing the device configuration.

In one embodiment, the above first parameter(s) of the first UE may be configured by the first UE. The above first parameter(s) may be determined by the first UE according to the communication requirement. For example, when the first UE is accessed to the network through the second UE, the timer for controlling the connection may be extended, for example, the appropriate timing duration of T300 may be set to avoid the timeout of the requesting the connection by the first UE.

Alternatively, the above first parameter(s) may be determined by the first UE based on the parameter(s) configured by the second UE and/or the parameter(s) configured by the network device. The reference is made to the above embodiments for the parameter(s) configured by the network device, which is not repeated here. The above parameter(s) configured by the second UE may be the parameter(s) configured by the second UE for the first UE, the parameter(s) configured by the second UE for multiple UEs that are accessed to the network through the second UE, or the parameter(s) configured by the second UE for the second UE, which are not limited here. The first UE may adjust part of the parameter(s) affecting the communication connection on the basis of the parameter(s) configured by the second UE and/or the parameter(s) configured by the network device to obtain the first parameter(s) applicable to the first UE. For example, the first UE may perform delay processing on the timing duration of T300 of the second UE to obtain the timing duration of the first UE. Alternatively, when the first UE determines the first parameter(s), the communication connection state of the second UE may be referred. For example, when the second UE is in the RRC connected state, the first UE may delay the timing duration configured by the second UE for the first duration. When the second UE is in an idle state, the first UE may delay the timing duration configured by the second UE for the second duration. The above first duration may be less than the second duration.

After the first UE determines the first parameter(s), the first parameter(s) may be synchronized to the second UE and/or the network device. The first UE may transmit the first parameter(s) to the second UE and/or the network device. The first UE may transmit the first parameter(s) to the second UE through the PC5 interface, and/or transmit the first parameter(s) to the network device through the manner of forwarding by the second UE.

In the above method for configuring the parameter(s), the first UE configures appropriate first parameter(s), so that the obtained first parameter(s) can better meet the communication requirement of the first UE.

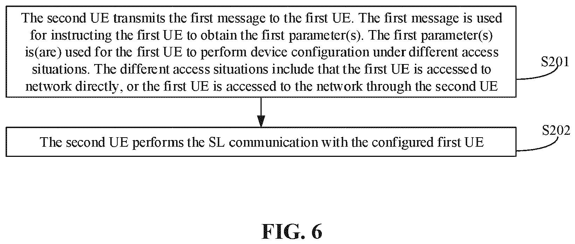

FIG. 6 is a flowchart of a method for parameter configuration in one embodiment. The method for parameter configuration in this embodiment is described by taking operating in the second UE in FIG. 1 as an example. As illustrated in FIG. 6, the above method for parameter configuration includes the following operations.

In operation S201, the second UE transmits the first message to the first UE. The first message is used for instructing the first UE to obtain the first parameter(s). The first parameter(s) is(are) used for the first UE to perform device configuration under different access situations. The different access situations include that the first UE is accessed to a network directly, or the first UE is accessed to the network through the second UE.

The reference is made to the description in the operation S101 for the specific limitation for the above different access situations and the parameter(s) configured for the first UE under the different access situations, which are not repeated here.

The second UE may transmit the first message to the first UE. Alternatively, the above first message may be Proximity Communication 5-RRC (PC5-RRC) message, exchange control information, MAC CE message, or physical layer message. The first message may include the parameter(s) configured by the second UE or the network device for the first UE, or may include indication information for the first UE to obtain the first parameter(s), to instruct the first UE to determine the first parameter(s) under the current access situation in the preset configuration parameters after receiving the first message. The type of the first message is not limited here.

The second UE may transmit the first message to the first UE based on the SL communication with the first UE, or may broadcast the first message to the first UE, which is not limited here.

The second UE may transmit the first message to the first UE through the unicast manner, the multicast manner or the broadcast manner.

Alternatively, the second UE may transmit the first message to the first UE through the unicast manner after the second UE establishes the SL communication connection with the first UE.

Alternatively, the second UE may transmit the first message to the first UE through the broadcast manner or the multicast manner before the second UE establishes the SL communication connection with the first UE.

In operation S202, the second UE performs the SL communication with the configured first UE.

After obtaining the first parameter(s), the first UE may use the first parameter(s) to perform the device configuration. The second UE may perform the SL communication with the configured first UE. On the basis of the SL communication, the second UE may forward the uplink signal transmitted by the first UE to the network device, or receive the downlink signal transmitted by the network device to the first UE, and then transmit the downlink signal to the first UE. The above uplink signal and the downlink signal may be a control signal between the network device and the first UE, and may be service data.

In the above method for parameter configuration, in the case that the first UE is accessed to the network through the second UE, the first parameter(s) of the first UE may be obtained after receiving the first message transmitted by the second UE. Since the first parameter(s) obtained by the first UE is(are) parameter(s) matched with the access situation, the first UE can obtain the first parameter(s) matched with the access situation in the case that the first UE is accessed to the network through the second UE, so as to meet the communication requirement of the first UE under the access situation.

In one embodiment, on the basis of the embodiments described above, the first parameter(s) may be configured by a network device. Alternatively, the network device configures the first configuration parameter(s) for the first UE that is accessed to the network through the second UE.

In one embodiment, the first configuration parameter(s) includes configuration sub-parameters corresponding to different communication connection states.

In one embodiment, the communication connection states includes at least one of: RRC connection state of the second UE, load state of the second UE, channel quality of an SL between the first UE and the second UE, or hop number of relays of the second UE and/or the first UE.

In one embodiment, the network device configures parameter(s) for the first UE under different access situations through different system messages/pre-configurations.

In one embodiment, the network device configures parameter(s) for the first UE that is accessed to the network through the second UE through the first system message/the first pre-configuration, and different fields in the first system message/the first pre-configuration correspond to different configuration sub-parameters.

In one embodiment, the network device configures parameter(s) for the first UE under the different access situations through different fields in the same system message/same pre-configuration.

In one embodiment, the network device configures parameter(s) for the first UE that is accessed to the network through the second UE through the first field in the second system message/the second pre-configuration, and different values in the first field correspond to different configuration sub-parameters.

In one embodiment, the network device configures parameter(s) for the first UE under different access situations through different values of the same field in the same message/same pre-configuration.

In one embodiment, the first configuration parameter(s) is(are) carried in the system message configured by the network device, and the first message includes a content of the system message configured by the network device and a communication connection state of the second UE.

In one embodiment, the first configuration parameter(s) is(are) carried in a system message configured by the network device, and the first message includes the first configuration parameter(s) and a communication connection state of the second UE.

In one embodiment, the first configuration parameter(s) is(are) carried in a system message configured by the network device. The second UE determines configuration sub-parameter(s) corresponding to a communication connection state of the second UE in the first configuration parameter(s) as the first parameter(s), and then transmits the first parameter(s) to the first UE through the first message.

In one embodiment, the first configuration parameter(s) is(are) carried in pre-configurations configured by the network device, and the first message includes a communication connection state of the second UE.

In one embodiment, the first parameter(s) is(are) configured by the second UE.

In one embodiment, the first parameter(s) may be determined by the second UE based on a communication connection state of the second UE.

In one embodiment, the communication connection state includes at least one of: RRC connection state of the second UE, load state of the second UE, channel quality of an SL between the first UE and the second UE, or hop number of relays of the second UE and/or the first UE.

The realization principle and technical effect of the above methods for parameter configuration provided by the above embodiments are similar to those of the previous embodiments, which are not repeated here.

In one embodiment, the first parameter(s) may be configured by the first UE, and the first UE may transmit the configured first parameter(s) to the second UE. The second UE may receive the first parameter(s) transmitted by the first UE, and then transmit the first parameter(s) configured by the first UE to the network device. The second UE may receive the first parameter(s) transmitted by the first UE through the PC5 interface, and then forward the first parameter(s) to the network device.

In the above embodiment, the second UE synchronizes the first parameter(s) configured by the first UE to the network device, so that the configuration parameter(s) of the network device side is the same as that of the first UE, and the stability of the communication connection is improved.

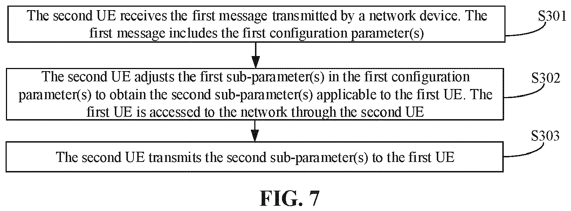

FIG. 7 is a flowchart of a method for parameter configuration in one embodiment. The method for parameter configuration in this embodiment is described by taking operating in the second UE in FIG. 1 as an example. As illustrated in FIG. 7, the above method for parameter configuration includes the following operations.

In operation S301, the second UE receives the first message transmitted by a network device. The first message includes the first configuration parameter(s).

The second UE may receive the first message transmitted by the network device. The above first message may include the first configuration parameter(s) transmitted by the network device. The above first configuration parameter(s) may be parameter(s) configured by the network device for the UE within the coverage area, so that the UE that has received the parameter(s) can perform the device configuration based on the first configuration parameter(s). Alternatively, the first configuration parameter(s) may be dedicated parameter(s) configured by the network device for the first UE that is accessed to the network through the second UE.

In operation S302, the second UE adjusts the first sub-parameter(s) in the first configuration parameter(s) to obtain the second sub-parameter(s) applicable to the first UE. The first UE is accessed to the network through the second UE.

The second UE may adjust the first configuration parameter(s). The adjusted first sub-parameter(s) may be parameter(s) related to the time among the first configuration parameter(s). The parameter(s) related to the time may be a signal transmission period, a timer length, etc. Alternatively, the above first sub-parameter(s) may include at least one of: boundary position of system frame number (SFN) corresponding to the first UE, SFN0 position corresponding to the first UE, start position of system information (SI) window corresponding to the first UE, or boundary position of modification period corresponding to the first UE.

When the second UE forwards the first configuration parameter(s) to the first UE, the first sub-parameter(s) in the first configuration parameter(s) is(are) forwarded directly, which may cause the first sub-parameter(s) to be non-applicable to the first UE. For example, the network device instructs, through the first sub-parameter(s), the first UE to transmit the uplink signal at time A, and the time when the second UE forwards the above first sub-parameter(s) has already exceeded the time A, so that the first UE cannot transmit the uplink signal on time. Therefore, the second UE may adjust the first sub-parameter(s). When adjusting the first sub-parameter(s), the second UE may adjust the time in the first sub-parameter(s) to a target time, and may add a delay on the basis of the first sub-parameter(s) to obtain the second sub-parameter(s). The adjustment manner for the above first sub-parameter(s) is not limited here.

When the second UE adjusts the first sub-parameter(s), the time granularity may be sub-frame, slot or symbol, and the granularity for the above adjustment is not limited here. For example, the second UE may delay N subframes on the basis of the first sub-parameter(s) to obtain the second sub-parameter(s). Alternatively, N symbol positions are added on the basis of the first sub-parameter(s) to obtain the second sub-parameter(s).

In operation S303, the second UE transmits the second sub-parameter(s) to the first UE.

The second UE may transmit the second sub-parameter(s) applicable to the first UE to the first UE, or may also transmit the unadjusted sub-parameter(s) in the first configuration parameter(s) to the first UE.

In the above method for parameter configuration, the second UE adjusts the first sub-parameter(s) in the first configuration parameter(s), so that the second sub-parameter(s), which is(are) applicable when the first UE is accessed to the network through the second UE, can be obtained, the second sub-parameter(s) obtained by the first UE can meet the communication requirement under the current access situation, and the reliability of communication connection is improved.

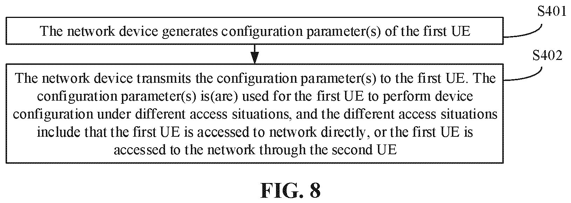

FIG. 8 is a flowchart of a method for parameter configuration in one embodiment. The method for parameter configuration in this embodiment is described by taking operating in the network device in FIG. 1 as an example. As illustrated in FIG. 8, the above method for parameter configuration includes the following operations.

In operation S401, the network device generates configuration parameter(s) of the first UE.

In operation S402, the network device transmits the configuration parameter(s) to the first UE. The configuration parameter(s) is(are) used for the first UE to perform device configuration under different access situations, and the different access situations include that the first UE is accessed to a network directly, or the first UE is accessed to the network through the second UE.

In one embodiment, the network device configures the first configuration parameter(s) for the first UE that is accessed to the network through the second UE.

In one embodiment, the first configuration parameter(s) includes configuration sub-parameter(s) corresponding to different communication connection states.

In one embodiment, the communication connection states includes at least one of: RRC connection state of the second UE, load state of the second UE, channel quality of an SL between the first UE and the second UE, or hop number of relays of the second UE and/or the first UE.

In one embodiment, the network device configures parameter(s) for the first UE under different access situations through different system messages/pre-configurations.

In one embodiment, the network device configures parameter(s) for the first UE that is accessed to the network through the second UE through the first system message/the first pre-configuration, and different fields in the first system message/the first pre-configuration correspond to different configuration sub-parameters.

In one embodiment, the network device configures parameter(s) for the first UE under the different access situations through different fields in the same system message/the same pre-configuration.

In one embodiment, the network device configures parameter(s) for the first UE that is accessed to the network through the second UE through the first field in the second system message/the second pre-configuration, and different values in the first field correspond to different configuration sub-parameters.

In one embodiment, the network device configures parameter(s) for the first UE under different access situations through different values of the same field in the same message/same pre-configuration.

The reference is made to the embodiment of the UE side for the technical principle and implementation effect of the above method for parameter configuration, which are no repeated here.

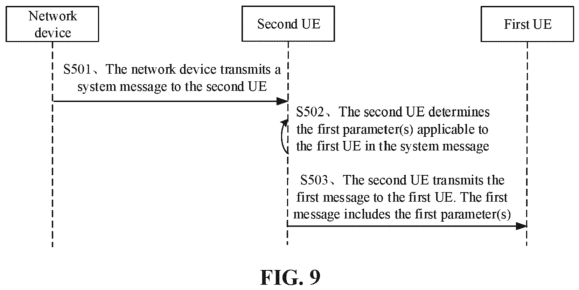

In one embodiment, a method for parameter configuration is provided. As illustrated in FIG. 9, the method includes the following operations.

In operation S501, a network device transmits a system message to the second UE.

In operation S502, the second UE determines the first parameter(s) applicable to the first UE in the system message.

In operation S503, the second UE transmits the first message to the first UE. The first message includes the first parameter(s).

The reference is made to the above embodiments for the technical principle and implementation effect of the above method for parameter configuration, which are no repeated here.

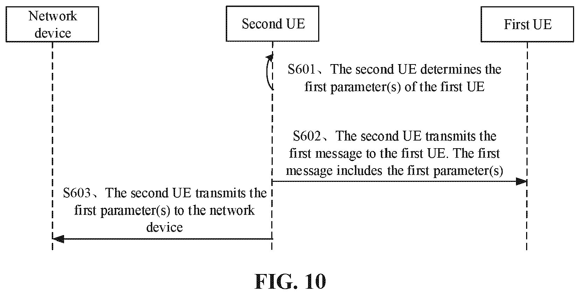

In one embodiment, a method for parameter configuration is provided. As illustrated in FIG. 10, the method includes the following operations.

In operations S601, the second UE determines the first parameter(s) of the first UE.

In operation S602, the second UE transmits the first message to the first UE. The first message includes the first parameter(s).

In operation S603, the second UE transmits the first parameter(s) to the network device.

The reference is made to the above embodiments for the technical principle and implementation effect of the above method for parameter configuration, which are no repeated here.

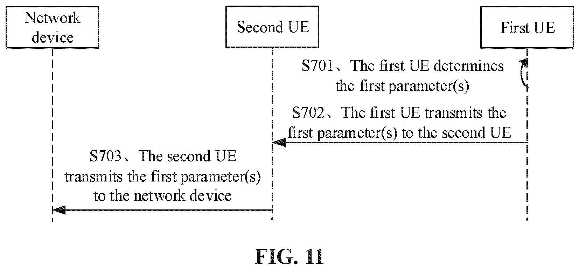

In one embodiment, a method for parameter configuration is provided. As illustrated in FIG. 11, the method includes the following operations.

In operation S701, the first UE determines the first parameter(s).

In operation S702, the first UE transmits the first parameter(s) to the second UE.

In operation S703, the second UE transmits the first parameter(s) to the network device.

The reference is made to the above embodiments for the technical principle and implementation effect of the above method for parameter configuration, which are no repeated here.

It should be understood that although the operations in the flowcharts of FIG. 2 to FIG. 11 are illustrated in sequence as indicated by the arrows, these operations are not necessarily performed in sequence as indicated by the arrows. Unless explicitly stated in the present disclosure, there are no strict sequential restrictions on the execution of these operations, and these operations may be performed in other sequences. Furthermore, at least a part of the operations in FIG. 2 to FIG.3 may include multiple sub-operations or stages, which are not necessarily performed at the same time, but may be performed at different times. These sub-operations or stages do not need to be performed in sequence, but may be performed in turn or alternately with other operations or at least a part of sub-operations or stages of other operations.

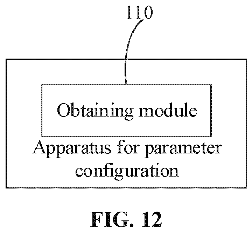

In one embodiment, an apparatus for parameter configuration is provided. As illustrated in FIG. 12, the apparatus includes an obtaining module 110.

The obtaining module 110 is configured to obtain the first parameter(s). The first parameter(s) is(are) used for the first UE to perform device configuration under different access situations, and the different access situations include that the first UE is accessed to network directly, or the first UE is accessed to the network through the second UE.

In one embodiment, on the basis of the above embodiment, the first parameter(s) is(are) configured by a network device.

In one embodiment, on the basis of the above embodiment, the network device configures the first configuration parameter(s) for the first UE that is accessed to the network through the second UE.

In one embodiment, on the basis of the above embodiment, the first configuration parameter(s) includes configuration sub-parameters corresponding to different communication connection states.

In one embodiment, on the basis of the above embodiment, the communication connection states include at least one of: RRC connection state of the second UE, load state of the second UE, channel quality of an SL between the first UE and the second UE, or hop number of relays of the second UE and/or the first UE.

In one embodiment, on the basis of the above embodiment, the network device configures parameter(s) for the first UE under different access situations through different system messages/pre-configurations.

In one embodiment, on the basis of the above embodiment, the network device configures, through the first system message/the first pre-configuration, parameter(s) for the first UE that is accessed to the network through the second UE, and different fields in the first system message/the first pre-configuration correspond to different configuration sub-parameters.

In one embodiment, on the basis of the above embodiment, the network device configures parameter(s) for the first UE under the different access situations through different fields in the same system message/same pre-configuration.

In one embodiment, on the basis of the above embodiment, the network device configures, through the first field in the second system message/the second pre-configuration, parameter(s) for the first UE that is accessed to the network through the second UE, and different values in the first field correspond to different configuration sub-parameters.

In one embodiment, on the basis of the above embodiment, the network device configures parameter(s) for the first UE under the different access situations through different values of the same field in the same message/a same pre-configuration.

In one embodiment, on the basis of the above embodiment, the first configuration parameter(s) is(are) carried in a system message configured by the network device, and the obtaining module 110 is specifically configured to receive a content of the system message transmitted by the network device and/or the second UE, and determine, in the system message, the first configuration parameter(s) corresponding to the first UE that is accessed to the network through the second UE as the first parameter(s).

In one embodiment, on the basis of the above embodiment, the first configuration parameter(s) is(are) carried in a system message configured by the network device, and the obtaining module 110 is specifically configured to receive the first configuration parameter(s) transmitted by the network device and/or transmitted by the second UE and a communication connection state of the second UE, and determine, in the first configuration parameter(s), a configuration sub-parameter(s) corresponding to the communication connection state as the first parameter(s).

In one embodiment, on the basis of the above embodiment, the first configuration parameter(s) is(are) carried in a system message configured by the network device, and the obtaining module 110 is specifically configured to receive the first parameter(s) transmitted by the second UE, the first parameter(s) being determined by the second UE according to a communication connection state in the first configuration parameter(s).

In one embodiment, on the basis of the above embodiment, the first configuration parameter(s) is carried in pre-configurations configured by the network device, and the obtaining module 110 is specifically configured to determine, in the pre-configurations configured by the network device, the first configuration parameter(s) corresponding to the first UE that is accessed to the network through the second UE as the first parameter(s).

In one embodiment, on the basis of the above embodiment, the first configuration parameter(s) is(are) carried in pre-configurations configured by the network device, and the obtaining module 110 is specifically configured to receive a communication connection state transmitted by the second UE, and determine, in the first configuration parameter(s), configuration sub-parameter(s) corresponding to the communication connection state as the first parameter(s).

In one embodiment, on the basis of the above embodiment, the first parameter(s) is(are) configured by the second UE.

In one embodiment, on the basis of the above embodiment, the first parameter(s) is(are) determined by the second UE based on a communication connection state of the second UE and/or parameter(s) configured by the network device.

In one embodiment, on the basis of the above embodiment, the communication connection state includes at least one of: RRC connection state of the second UE, load state of the second UE, channel quality of an SL between the first UE and the second UE, or hop number of relays of the second UE and/or the first UE.

In one embodiment, on the basis of the above embodiment, the first parameter(s) is(are) configured by the first UE.

In one embodiment, on the basis of the above embodiment, the first parameter(s) is(are) determined by the first UE based on parameter(s) configured by the second UE and/or parameter(s) configured by the network device.

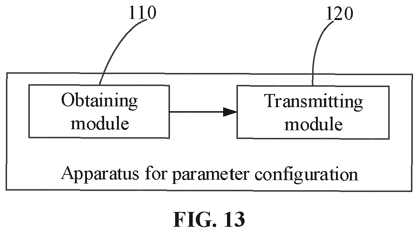

In one embodiment, on the basis of the above embodiment, as illustrated in FIG. 13, the above apparatus further includes a transmitting module 120. The transmitting module 120 is configured to transmit the first parameter(s) to the second UE and/or a network device.

The reference is made to the above method embodiment of the UE side for the technical principle and implementation effect of the apparatus for configuring the parameter provided by the above embodiment, which are no repeated here.

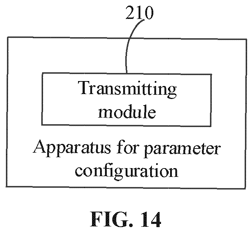

In one embodiment, an apparatus for parameter configuration is provided. As illustrated in FIG. 14, the apparatus includes a transmitting module 210.

The transmitting module 210 is configured to transmit the first message to the first UE. The first message is used for instructing the first UE to obtain the first parameter(s). The first parameter(s) is(are) used for the first UE to perform device configuration under different access situations, and the different access situations include that the first UE is accessed to network directly, or the first UE is accessed to the network through the second UE.

In one embodiment, on the basis of the above embodiment, the first parameter(s) is(are) configured for a network device.

In one embodiment, on the basis of the above embodiment, the network device configures the first configuration parameter(s) for the first UE that is accessed to the network through the second UE.

In one embodiment, on the basis of the above embodiment, the first configuration parameter(s) includes configuration sub-parameters corresponding to different communication connection states.

In one embodiment, on the basis of the above embodiment, the communication connection states includes at least one of: RRC connection state of the second UE, load state of the second UE, channel quality of an SL between the first UE and the second UE, or hop number of relays of the second UE and/or the first UE.

In one embodiment, on the basis of the above embodiment, the network device configures parameter(s) for the first UE under different access situations through different system messages/pre-configurations.

In one embodiment, on the basis of the above embodiment, the network device configures, through the first system message/the first pre-configuration, parameter(s) for the first UE that is accessed to the network through the second UE, and different fields in the first system message/the first pre-configuration correspond to different configuration sub-parameters.

In one embodiment, on the basis of the above embodiment, the network device configures parameter(s) for the first UE under different access situations through different fields in the same system message/same pre-configuration.

In one embodiment, on the basis of the above embodiment, the network device configures, through the first field in the second system message/the second pre-configuration, parameter(s) for the first UE that is accessed to the network through the second UE, and different values in the first field correspond to different configuration sub-parameters.

In one embodiment, on the basis of the above embodiment, the network device configures parameter(s) for the first UE under the different access situations through different values of the same field in the same message/same pre-configuration.

In one embodiment, on the basis of the above embodiment, the first configuration parameter(s) is(are) carried in a system message configured by the network device, and the first message includes a content of the system message configured by the network device and a communication connection state of the second UE.

In one embodiment, on the basis of the above embodiment, the first configuration parameter(s) is(are) carried in a system message configured by the network device, and the first message includes the first configuration parameter(s) and a communication connection state of the second UE.

In one embodiment, on the basis of the above embodiment, the first configuration parameter(s) is(are) carried in a system message configured by the network device, and the transmitting module 210 is specifically configured to determine, in the first configuration parameter(s), configuration sub-parameter(s) corresponding to a communication connection state of the second UE as the first parameter(s), and transmit the first parameter(s) to the first UE through the first message.

In one embodiment, on the basis of the above embodiment, the first configuration parameter(s) is(are) carried in pre-configurations configured by the network device, and the first message includes a communication connection state of the second UE.

In one embodiment, on the basis of the above embodiment, the first parameter(s) is(are) configured by the second UE.

In one embodiment, on the basis of the above embodiment, the first parameter(s) is(are) determined by the second UE based on a communication connection state of the second UE.

In one embodiment, on the basis of the above embodiment, the communication connection state includes at least one of: RRC connection state of the second UE, load state of the second UE, channel quality of an SL between the first UE and the second UE, and hop number of relays the second UE and/or the first UE.

In one embodiment, on the basis of the above embodiment, the transmitting module 210 is specifically configured to transmit the first message to the first UE through a unicast manner, a multicast manner or a broadcast manner.

In one embodiment, on the basis of the above embodiment, the transmitting module 210 is specifically configured to transmit the first parameter(s) configured by the second UE to the network device.

In one embodiment, on the basis of the above embodiment, the transmitting module 210 is specifically configured to receive the first parameter(s) transmitted by the first UE, and transmit the first parameter(s) configured by the first UE to the network device. The first parameter(s) is(are) configured by the first UE.

In one embodiment, on the basis of the above embodiment, the transmitting module 210 is specifically configured to transmit the first message by using a unicast manner after a SL communication connection between the second UE and the first UE is established.

In one embodiment, on the basis of the above embodiment, the transmitting module 210 is specifically configured to transmit the first message by using a broadcast manner or a multicast manner before a SL communication connection between the second UE and the first UE is established.

In one embodiment, on the basis of the above embodiment, the first message is PC5-RRC message, exchange control information, MAC CE message, or physical layer message.

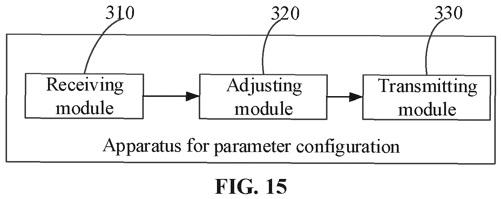

In one embodiment, an apparatus for parameter configuration is provided. As illustrated in FIG. 15, the apparatus includes a receiving module 310, an adjusting module 320 and a transmitting module 330.

The receiving module 310 is configured to receive the first message transmitted by a network device, the first message including the first configuration parameter(s).

The adjusting module 320 is configured to adjust the first sub-parameter(s) in the first configuration parameter(s) to obtain the second sub-parameter(s) applicable to the first UE. The first UE is accessed to a network through the second UE.

The transmitting module 330 is configured to transmit the second sub-parameter(s) to the first UE.

In one embodiment, on the basis of the above embodiment, the first sub-parameter(s) includes at least one of: a boundary position of a SFN corresponding to the first UE, a SFN0 position corresponding to the first UE, a start position of a SI window corresponding to the first UE, or a boundary position of a modification period corresponding to the first UE.

The implementation principle and technical effect of the apparatus for configuring the parameter provided by the above embodiment are similar to those of the above method embodiment of the second UE side, which are no repeated here.

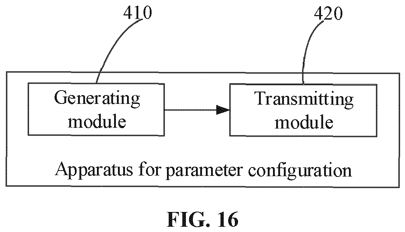

In one embodiment, an apparatus for parameter configuration is provided. As illustrated in FIG. 16, the apparatus includes a generating module 410 and a transmitting module 420.

The generating module 410 is configured to generate configuration parameter(s) of the first UE.

The transmitting module 420 is configured to transmit the configuration parameter(s) to the first UE. The configuration parameter(s) is(are) used for the first UE to perform device configuration under different access situations, and the different access situations include that the first UE is accessed to network directly, or the first UE is accessed to the network through the second UE.

In one embodiment, on the basis of the above embodiment, the network device configures the first configuration parameter(s) for the first UE that is accessed to the network through the second UE.

In one embodiment, on the basis of the above embodiment, the first configuration parameter(s) includes configuration sub-parameters corresponding to different communication connection states.

In one embodiment, on the basis of the above embodiment, the communication connection states include at least one of: RRC connection state of the second UE, load state of the second UE, channel quality of an SL between the first UE and the second UE, or hop number of relays of the second UE and/or the first UE.

In one embodiment, on the basis of the above embodiment, the network device configures parameter(s) for the first UE under different access situations through different system messages/pre-configurations.

In one embodiment, on the basis of the above embodiment, the network device configures, through the first system message/first pre-configuration, parameter(s) for the first UE that is accessed to the network through the second UE, and different fields in the first system message/the first pre-configuration correspond to different configuration sub-parameters.

In one embodiment, on the basis of the above embodiment, the network device configures parameter(s) for the first UE under the different access situations through different fields in the same system message/same pre-configuration.

In one embodiment, on the basis of the above embodiment, the network device configures, through a first field in the second system message/second pre-configuration, parameter(s) for the first UE that is accessed to the network through the second UE, and different values in the first field correspond to different configuration sub-parameters.

In one embodiment, on the basis of the above embodiment, the network device configures parameter(s) for the first UE under different access situations through different values of the same field in the same message/same pre-configuration.

The implementation principle and technical effect of the apparatus for parameter configuration provided by the above embodiment are similar to those of the above method embodiment of the network device side, which are no repeated here.

The division of various modules in the above apparatuses for parameter configuration is for illustration only, and in other embodiments, the apparatuses for parameter configuration may be divided into different modules as needed to complete all or part of the functions of the apparatuses for configuring the parameter.

The reference is made to the limitation for the above methods for parameter configuration for the specific limitations for the apparatuses for parameter configuration, which are not repeated here. The various modules in the above apparatuses for parameter configuration may be implemented in whole or in part by software, hardware and combinations thereof. The various modules may be embedded in or independent of the processor in the computer device in the form of hardware, or may be stored in the memory in the computer device in the form of software, so as to facilitate the processor to call and execute the operations corresponding to various modules.

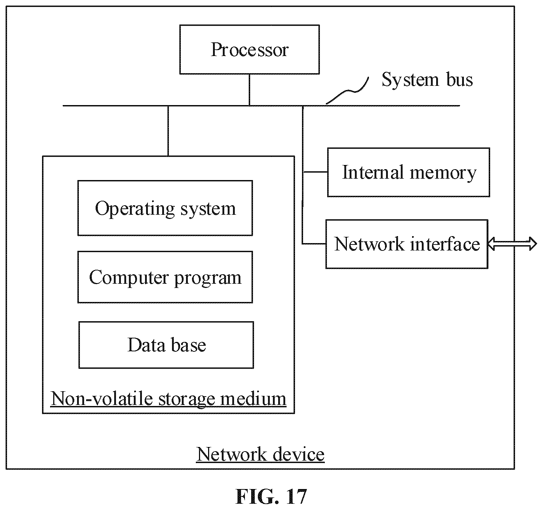

FIG. 17 is a schematic diagram of the internal structure of a network device in one embodiment. As illustrated in FIG. 17, the network device includes a processor, a non-volatile storage medium, an internal memory and a network interface that are connected through a system bus. The processor is used for providing computing and control capabilities and supporting the operation of the whole electronic device. The memory is used for storing data, programs, etc. The memory stores at least one computer program, which may be executed by the processor to implement the method for parameter configuration applicable for the network device provided in the embodiment of the present disclosure. The memory may include a non-volatile storage medium and an internal memory. The non-volatile storage medium stores an operating system and a computer program. The computer program may be executed by a processor for implementing methods for parameter configuration provided by the various embodiments. The internal memory provides a caching operating environment for the operating system and the computer program in the non-volatile storage medium. The network interface may be an Ethernet card, a wireless network card or the like for communicating with an external electronic device. Those skilled in the art will appreciate that the structures illustrated in the diagram parameter configuration are only a block diagram of a part of the structures related to the solutions of the present disclosure, which does not constitute a limitation to the network device to which the solutions of the present disclosure are applied. The specific network device may include more or fewer components than illustrated in the diagram, or certain components may be combined, or different component arrangements may exist.

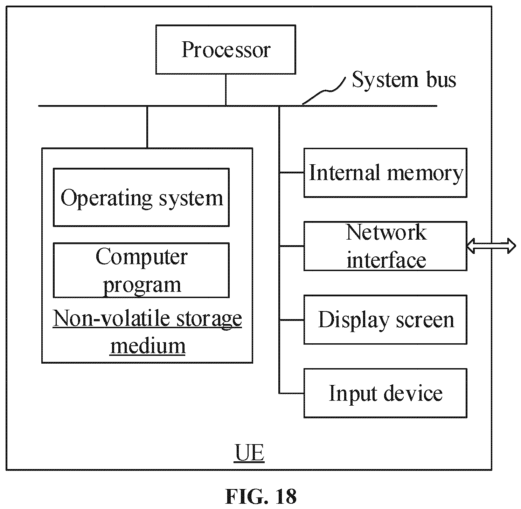

In one embodiment, UE is provided, the internal structure of which may be illustrated in FIG. 18. The UE includes a processor, a memory, a network interface, a display screen and an input device that are connected through a system bus. The processor of the UE is used for providing computing and control capabilities. The memory of the UE includes a non-volatile storage medium and an internal memory. The non-volatile storage medium stores an operating system and a computer program. The internal memory provides an environment for the operation of the operating system and the computer program in the nonvolatile storage medium. The network interface of the UE is used for communicating with an external terminal through a network connection. The computer program is executed by the processor to implement the method for configuring the parameter. The display screen of the UE may be a liquid crystal display screen or an electronic ink display screen. The input device of the UE may be a touch layer covered on the display screen, a key set, a trackball or a touchpad on the shell of the UE, an external keyboard, a touchpad or a mouse, etc.

Those skilled in the art will appreciate that the structures in FIG. 17 or FIG. 18 are only block diagrams of a part of structures related to the solutions of the present disclosure, which do not constitute a limitation on the network device or terminal to which the solutions of the present disclosure are applied. The specific network device or terminal may include more or fewer components than illustrated in the diagrams, or certain components may be combined, or different component arrangements may exist.

The various modules in the network device provided in the embodiment of the present disclosure may be implemented in the form of a computer program. The computer program may be run on a terminal or a server. The program module composed of the computer program may be stored on the memory of the terminal or the server. When the computer program is executed by the processor, the operations of the methods described in embodiments of the present disclosure are implemented.

In one embodiment, UE including a memory and a processor is provided. A computer program is stored in the memory, and operations of the method for parameter configuration on the UE side are implemented when the processor executes the computer program.

The implementation principle and technical effect of the UE provided by the above embodiment are similar to those of the above method embodiments, which are not repeated here.

In one embodiment, a network device including a memory and a processor is provided. A computer program is stored in the memory, and operations of the method for parameter configuration on the network device side are implemented when the processor executes the computer program.

The implementation principle and technical effect of a network device provided by the above embodiment are similar to those of the above method embodiments, which are not repeated here.

The embodiment of the present disclosure further provides a computer readable storage medium. One or more non-volatile computer-readable storage medium containing instructions executable for the computer that, when executed by one or more processors, cause the processor to perform the operations of the above method for parameter configuration.

The implementation principle and technical effect of a computer-readable storage medium provided by the above embodiment are similar to those of the above method embodiments, which are not repeated here.

The embodiment of the present disclosure further provides a computer readable storage medium. One or more non-volatile computer-readable storage medium containing instructions executable for the computer that, when executed by one or more processors, cause the processor to perform the operations of the above method for parameter configuration.

The implementation principle and technical effect of a computer-readable storage medium provided by the above embodiment are similar to those of the above method embodiments, which are not repeated here.

A computer program product containing instructions that, when run on a computer, cause the computer to perform a method for parameter configuration.

Any reference to the memory, the storage, the database or other medium used herein may include non-volatile and/or volatile memory. The non-volatile memory may include a read-only memory (ROM), a programmable ROM (PROM), an electrically programmable ROM (EPROM), an electrically erasable programmable ROM (EEPROM), or flash memory. The volatile memory may include a random access memory (RAM) that serves as an external cache memory. By way of illustration and not limitation, the RAM is available in various forms, such as an static RAM (SRAM), a dynamic RAM (DRAM), an synchronous DRAM (SDRAM), a double data rate SDRAM (DDR SDRAM), an enhanced SDRAM (ESDRAM), an synchlink DRAM (SLDRAM), a Rambus direct RAM (RDRAM), a direct Rambus dynamic RAM (DRDRAM), and a Rambus dynamic RAM (RDRAM).

The above embodiments are merely illustrative of several embodiments of the present disclosure, and the description thereof is more specific and detailed, but should not therefore be construed as limiting the scope of the patent disclosure. It should be noted that several modifications and modifications may be made to those of ordinary skill in the art without departing from the concept of the present disclosure, which fall within the scope of protection of the present disclosure. Therefore, the scope of protection of the present disclosure shall be subject to the attached claims.

## Claims

1. A method for parameter configuration, comprising:
obtaining, by first user equipment (UE), first parameter(s), wherein the first parameter(s) is(are) used for the first UE to perform device configuration under different access situations, and the different access situations comprise that the first UE is accessed to network directly, or the first UE is accessed to the network through second UE.

2. The method of claim 1, wherein the first parameter(s) is(are) configured by a network device.

3. The method of claim 2, wherein the network device configures first configuration parameter(s) for the first UE that is accessed to the network through the second UE.

4. The method of claim 3, wherein the first configuration parameter(s) comprises configuration sub-parameters corresponding to different communication connection states.

5. The method of claim 4, wherein the communication connection states comprise at least one of: radio resource control (RRC) connection state of the second UE, load state of the second UE, channel quality of a sidelink (SL) between the first UE and the second UE, or hop number of relays of the second UE and/or the first UE.

6. The method of claim 3 or 4, wherein the network device configures parameter(s) for the first UE under different access situations through different system messages/pre-configurations.

7. The method of claim 6, wherein the network device configures, through a first system message/a first pre-configuration, parameter(s) for the first UE that is accessed to the network through the second UE, and different fields in the first system message/the first pre-configuration correspond to different configuration sub-parameters.

8. The method of claim 3 or 4, wherein the network device configures parameter(s) for the first UE under the different access situations through different fields in a same system message/a same pre-configuration.

9. The method of claim 8, wherein the network device configures, through a first field in an second system message/a second pre-configuration, parameter(s) for the first UE that is accessed to the network through the second UE, and different values in the first field correspond to different configuration sub-parameters.

10. The method of claim 3 or 4, wherein the network device configures parameter(s) for the first UE under the different access situations through different values of a same field in a same message/a same pre-configuration.

11. The method of any one of claims 3 to 10, wherein the first configuration parameter(s) is(are) carried in a system message configured by the network device, and obtaining, by the first UE, the first parameter(s) comprises:
receiving a content of the system message transmitted by the network device and/or the second UE; and
determining first configuration parameter(s) corresponding to the first UE that is accessed to the network through the second UE in the system message as the first parameter(s).

12. The method of any one of claims 4 to 10, wherein the first configuration parameter(s) is(are) carried in a system message configured by the network device, and obtaining, by the first UE, the first parameter(s) comprises:
receiving the first configuration parameter(s) transmitted by the network device and/or transmitted by the second UE and a communication connection state of the second UE; and
determining, in the first configuration parameter(s), configuration sub-parameter(s) corresponding to the communication connection state as the first parameter(s).

13. The method of any one of claims 3 to 10, wherein the first configuration parameter(s) is(are) carried in a system message configured by the network device, and obtaining, by the first UE, the first parameter(s) comprises:
receiving first parameter(s) transmitted by the second UE, the first parameter(s) being determined by the second UE in the first configuration parameter(s) according to a communication connection state.

14. The method of any one of claims 3 to 10, wherein the first configuration parameter(s) is(are) carried in pre-configurations configured by the network device, and obtaining, by the first UE, the first parameter(s) comprises:
determining, in the pre-configurations configured by the network device, first configuration parameter(s) corresponding to the first UE that is accessed to the network through the second UE as the first parameter(s).

15. The method of any one of claims 4 to 10, wherein the first configuration parameter(s) is(are) carried in pre-configurations configured by the network device, and obtaining, by the first UE, the first parameter(s) comprises:
receiving a communication connection state transmitted by the second UE; and
determining, in the first configuration parameter(s), configuration sub-parameter(s) corresponding to the communication connection state as the first parameter(s).

16. The method of claim 1, wherein the first parameter(s) is(are) configured by the second UE.

17. The method of claim 16, wherein the first parameter(s) is(are) determined by the second UE based on a communication connection state of the second UE and/or parameter(s) configured by the network device.

18. The method of claim 17, wherein the communication connection state comprises at least one of: a RRC connection state of the second UE, a load state of the second UE, a channel quality of an SL between the first UE and the second UE, or a hop number of relays of the second UE and/or the first UE.

19. The method of claim 1, wherein the first parameter(s) is(are) configured by the first UE.

20. The method of claim 19, wherein the first parameter(s) is(are) determined by the first UE based on parameter(s) configured by the second UE and/or parameter(s) configured by a network device.

21. The method of claim 19 or 20, further comprising:
transmitting the first parameter(s) to the second UE and/or a network device.

22. A method for parameter configuration, comprising:
transmitting, by second user equipment (UE), a first message to first UE, wherein the first message is used for instructing the first UE to obtain first parameter(s), the first parameter(s) is(are) used for the first UE to perform device configuration under different access situations, and the different access situations comprise that the first UE is accessed to network directly, or the first UE is accessed to the network through the second UE.

23. The method of claim 22, wherein the first parameter(s) is(are) configured by a network device.

24. The method of claim 23, wherein the network device configures first configuration parameter(s) for the first UE that is accessed to the network through the second UE.

25. The method of claim 24, wherein the first configuration parameter(s) comprises configuration sub-parameters corresponding to different communication connection states.

26. The method of claim 25, wherein the communication connection states comprise at least one of: a radio resource control (RRC) connection state of the second UE, a load state of the second UE, a channel quality of a sidelink (SL) between the first UE and the second UE, or a hop number of relays of the second UE and/or the first UE.

27. The method of claim 24 or 25, wherein the network device configures parameter(s) for the first UE under different access situations through different system messages/pre-configurations.

28. The method of claim 27, wherein the network device configures, through a first system message/a first pre-configuration, parameter(s) for the first UE that is accessed to the network through the second UE, and different fields in the first system message/the first pre-configuration correspond to different configuration sub-parameters.

29. The method of claim 24 or 25, wherein the network device configures parameters for the first UE under the different access situations through different fields in a same system message/a same pre-configuration.

30. The method of claim 29, wherein the network device configures, through a first field in an second system message/a second pre-configuration, parameter(s) for the first UE that is accessed to the network through the second UE, and different values in the first field correspond to different configuration sub-parameters.

31. The method of claim 24 or 25, wherein the network device configures parameter(s) for the first UE under the different access situations through different values of a same field in a same message/a same pre-configuration.

32. The method of any one of claims 24 to 31, wherein the first configuration parameter(s) is(are) carried in a system message configured by the network device, and the first message comprises a content of the system message configured by the network device and a communication connection state of the second UE.

33. The method of any one of claims 24 to 31, wherein the first configuration parameter(s) is(are) carried in a system message configured by the network device, and the first message comprises the first configuration parameter(s) and a communication connection state of the second UE.

34. The method of any one of claims 25 to 31, wherein the first configuration parameter(s) is(are) carried in a system message configured by the network device, and transmitting the first message to the first UE comprises:
determining, in the first configuration parameter(s), configuration sub-parameter(s) corresponding to a communication connection state of the second UE as the first parameter(s); and
transmitting the first parameter(s) to the first UE through the first message.

35. The method of any one of claims 24 to 31, wherein the first configuration parameter(s) is(are) carried in pre-configurations configured by the network device, and the first message comprises a communication connection state of the second UE.

36. The method of claim 22, wherein the first parameter(s) is(are) configured by the second UE.

37. The method of claim 36, wherein the first parameter(s) is(are) determined by the second UE based on a communication connection state of the second UE.

38. The method of claim 37, wherein the communication connection state comprises at least one of: RRC connection state of the second UE, load state of the second UE, channel quality of an SL between the first UE and the second UE, or hop number of relays of the second UE and/or the first UE.

39. The method of any one of claims 22 to 38, wherein transmitting the first message to the first UE comprises:
transmitting the first message to the first UE through a unicast manner, a multicast manner or a broadcast manner.

40. The method of any one of claims 36 to 38, further comprising:
transmitting the first parameter(s) configured by the second UE to the network device.

41. The method of any one of claims 22 to 38, further comprising:
receiving the first parameter(s) transmitted by the first UE, wherein the first parameter(s) is configured by the first UE; and
transmitting the first parameter(s) configured by the first UE to the network device.

42. The method of any one of claims 22 to 38, wherein transmitting the first message to the first UE comprises:
transmitting the first message by using a unicast manner after a SL communication connection between the second UE and the first UE is established.

43. The method of any one of claims 22 to 38, wherein transmitting the first message to the first UE comprises:
transmitting the first message by using a broadcast manner or a multicast manner before a SL communication connection between the second UE and the first UE is established.

44. The method of any one of claims 22 to 38, wherein the first message is Proximity Communication 5-RRC (PC5-RRC) message, exchange control information, Media Access Control Control Element (MAC CE) message, or physical layer message.

45. A method for parameter configuration, comprising:
receiving, by second user equipment (UE), a first message transmitted by a network device, the first message comprising first configuration parameter(s);
adjusting, by the second UE, first sub-parameter(s) in the first configuration parameter(s) to obtain second sub-parameter(s) applicable to first UE, wherein the first UE is accessed to a network through the second UE; and
transmitting, by the second UE, the second sub-parameter(s) to the first UE.

46. The method of claim 45, wherein the first sub-parameter(s) comprises at least one of: a boundary position of a system frame number (SFN) corresponding to the first UE, a SFN0 position corresponding to the first UE, a start position of a system information (SI) window corresponding to the first UE, or a boundary position of a modification period corresponding to the first UE.

47. A method for parameter configuration, comprising:
generating, by a network device, configuration parameter(s) of first user equipment (UE); and
transmitting, by the network device, the configuration parameter(s) to the first UE, wherein the configuration parameter(s) is(are) used for the first UE to perform device configuration under different access situations, and the different access situations comprise that the first UE is accessed to network directly, or the first UE is accessed to the network through an second UE.

48. The method of claim 47, wherein the network device configures first configuration parameter(s) for the first UE that is accessed to the network through the second UE.

49. The method of claim 48, wherein the first configuration parameter(s) comprises configuration sub-parameters corresponding to different communication connection states.

50. The method of claim 49, wherein the communication connection states comprise at least one of: radio resource control (RRC) connection state of the second UE, load state of the second UE, channel quality of a sidelink (SL) between the first UE and the second UE, or hop number of relays of the second UE and/or the first UE.

51. The method of any one of claims 47 to 50, wherein the network device configures parameter(s) for the first UE under different access situations through different system messages/pre-configurations.

52. The method of claim 51, wherein the network device configures, through a first system message/a first pre-configuration, parameter(s) for the first UE that is accessed to the network through the second UE, and different fields in the first system message/the first pre-configuration correspond to different configuration sub-parameters.

53. The method of any one of claims 47 to 50, wherein the network device configures parameter(s) for the first UE under the different access situations through different fields in a same system message/a same pre-configuration.

54. The method of claim 53, wherein the network device configures, through a first field in a second system message/a second pre-configuration, parameter(s) for the first UE that is accessed to the network through the second UE, and different values in the first field correspond to different configuration sub-parameters.

55. The method of any one of claims 47 to 50, wherein the network device configures parameter(s) for the first UE under the different access situations through different values of a same field in a same message/a same pre-configuration.

56. An apparatus for parameter configuration, applicable for first user equipment (UE), comprising:
an obtaining module, configured to obtain first parameter(s), wherein the first parameter(s) is(are) used for the first UE to perform device configuration under different access situations, and the different access situations comprise that the first UE is accessed to network directly, or the first UE is accessed to the network through second UE.

57. An apparatus for parameter configuration, comprising:
a transmitting module, configured to transmit a first message to first user equipment (UE), wherein the first message is used for instructing the first UE to obtain first parameter(s), the first parameter(s) is(are) used for the first UE to perform device configuration under different access situations, and the different access situations comprise that the first UE is accessed to network directly, or the first UE is accessed to the network through the second UE.

58. An apparatus for parameter configuration, comprising:
a receiving module, configured to receive a first message transmitted by a network device, the first message comprising first configuration parameter(s);
an adjusting module, configured to adjust first sub-parameter(s) in the first configuration parameter(s) to obtain second sub-parameter(s) applicable to first user equipment (UE), wherein the first UE is accessed to a network through the second UE; and
a transmitting module, configured to transmit the second sub-parameter(s) to the first UE.

59. An apparatus for parameter configuration, comprising:
a generating module, configured to generate configuration parameter(s) of first user equipment (UE); and
a transmitting module, configured to transmit the configuration parameter(s) to the first UE, wherein the configuration parameter(s) is(are) used for the first UE to perform a device configuration under different access situations, and the different access situations comprise that the first UE is accessed to network directly, or the first UE is accessed to the network through an second UE.

60. User equipment (UE) comprising a memory and a processor, wherein the memory is configured to store a computer program, and when the processor executes the computer program, operations of a method of any one of claims 1 to 46 are implemented.

61. A network device comprising a memory and a processor, wherein the memory is configured to store a computer program, and when the processor executes the computer program, operations of a method of any one of claims 47 to 55 are implemented.

62. A computer readable storage medium having a computer program stored thereon, wherein when the computer program is executed by a processor, operations of a method of any one of claims 1 to 55 are implemented.
